# EUROPÄISCHE PATENTSCHRIFT

(11) **EP 3 039 077 B1**
(45) Veröffentlichungstag und Bekanntmachung des Hinweises auf die Patenterteilung: **29.05.2019**
(21) Anmeldenummer: 14750221.5
(22) Anmeldetag: 08.08.2014
(51) Int. Cl.: C08L 77/02, C08K 3/00, C08L 77/06, C08K 3/22

(54) **POLYAMID-FORMMASSEN UND HIERAUS HERGESTELLTE FORMKÖRPER**
POLYAMIDE MOLDING COMPOUNDS AND MOLDED ARTICLES PRODUCED THEREFROM
MATIÈRES MOULABLES À BASE DE POLYAMIDE ET ARTICLES MOULÉS À PARTIR DE CES MATIÈRES

(30) Priorität: 29.08.2013 DE 102013217241
(43) Veröffentlichungstag der Anmeldung: 06.07.2016
(73) Patentinhaber: EMS-Patent AG, 7013 Domat/Ems (CH)
(72) Erfinder: THOMAS, Oliver, CH-7013 Domat/Ems (CH); LAMBERTS, Nikolai, CH-7402 Bonaduz (CH); HOFFMANN, Botho, CH-7013 Domat/Ems (CH); BAYER, Andreas, CH-7013 Domat/Ems (CH)
(74) Vertreter: Pfenning, Meinig & Partner mbB
(86) Internationale Anmeldenummer: PCT/EP2014/067126
(87) Internationale Veröffentlichungsnummer: WO 2015/028292

(56) Entgegenhaltungen:
- EP-A1- 1 162 236
- EP-A1- 2 535 365
- GB-A- 904 972

## Beschreibung

Die vorliegende Erfindung betrifft Polyamid-Formmassen mit einer verbesserten Wärmealterungsbeständigkeit und hieraus hergestellte Formkörper.

Thermoplastische Polyamide werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert, nicht aber dauerhaft verhindert werden, was sich z.B. in einem Abfallen der mechanischen Kennwerte äußert. Die Verbesserung der Wärmealterungsbeständigkeit von Polyamiden ist überaus wünschenswert, da dadurch längere Lebenszeiten für thermisch belastete Bauteile erreicht werden können bzw. deren Ausfallrisiko gesenkt werden kann. Alternativ kann eine verbesserte Wärmealterungsbeständigkeit auch den Einsatz der Bauteile bei höheren Temperaturen ermöglichen.

Die Wärmealterungsbeständigkeit ist in den bekannten Polyamidformmassen, insbesondere über längere thermische Belastungszeiträume und bei Temperaturen über 200°C, immer noch unzureichend.

Es sind unterschiedliche Ansätze zur Verbesserung der Wärmealterungsbeständigkeit aus dem Stand der Technik bekannt.

So beschreibt die EP 2 535 365 A1 eine Polyamid-Formmasse auf Basis teilkristalliner, teilaromatischer Polyamide in die als Wärmestabilisator Kupferverbindungen, Stabilisatoren auf Basis sekundärer aromatischer Amine oder sterisch gehinderter Phenole oder Phosphite bzw. Phosphonite zugesetzt sind.

Aus der GB 904,972 sind Polyamide bekannt, die gegen die Einflüsse von Licht und Hitze stabilisiert sind. Als Stabilisatoren werden hier Kombinationen aus hypophosphoriger Säure und/oder Hypophosphaten in Kombination mit Cer- oder Titansalzen beschrieben.

Aus der EP 1 832 624 A1 ist die Verwendung von Radikalfängern zur Stabilisierung von organischen Polymeren gegen photochemischen, thermischen, physikalischen oder chemisch induzierten Abbau bekannt, wobei hier als Radikalfänger Cerdioxid eingesetzt wird.

Ausgehend hiervon war es Aufgabe der vorliegenden Erfindung, Polyamid-Formmassen zur Verfügung zu stellen, aus denen die Bauteile für den Automobil-, den Elektro- und Elektronikbereich hergestellt werden können, die sich gegenüber den aus dem Stand der Technik bekannten Polyamidformmassen durch eine verbesserte Wärmealterungsbeständigkeit bei Temperaturen von wenigstens 180°C auszeichnen. Gleichzeitig müssen die Bauteile eine ausreichende Festigkeit bzw. Steifigkeit bei höheren Temperaturen, insbesondere über 100°C aufweisen. Weiterhin besteht eine Teilaufgabe der vorliegenden Erfindung darin Polyamid-Formmassen bereit zu stellen, die sich ohne grossen analytischen Aufwand einwandfrei identifizieren lässt.

Diese Aufgabe wird durch die Polyamid-Formmasse mit den Merkmalen des Anspruchs 1 und den Formkörper mit den Merkmalen des Anspruchs 13 gelöst. Die weiteren abhängigen Ansprüche zeigen vorteilhafte Weiterbildungen auf.

Erfindungsgemäß wird eine Polyamid-Formmasse mit folgender Zusammensetzung bereitgestellt:
(A) 25 bis 84,99 Gew.-% mindestens eines caprolactamhaltigen Polyamids (A1) mit einem Caprolactamgehalt von mindestens 50 Gew.-% und mindestens eines weiteren Polyamids (A2), wobei der Anteil des mindestens einen caprolactamhaltigen Polyamids (A1) an Komponente (A) 10 bis 40 Gew.-% beträgt und der Anteil des mindestens einen weiteren Polyamids (A2) an Komponente (A) 60 bis 90 Gew.-% beträgt, wobei sich die Komponenten (A1) und (A2) auf 100 Gew.-% ergänzen.
(B) 15 bis 70 Gew.-% mindestens eines Füll- und Verstärkungsmittels,
(C) 0,01 bis 5,0 Gew.-% mindestens eines anorganischen Radikalfängers, welcher eine Lanthanoid-Verbindung ist, ausgewählt aus der Gruppe bestehend aus
   - Fluoriden, Chloriden, Bromiden, Iodiden, Oxidhalogeniden, Sulfaten, Nitraten, Phosphaten, Chromaten, Perchloraten, Oxalaten, den Monochalkogeniden von Schwefel, Selen und Tellur, Carbonaten, Hydroxiden, Oxiden, Trifluoromethansulfonaten, Acetylacetonaten, Alkoholaten, 2-Ethylhexanoaten
      der Lanthanoide Lanthan, Cer, Praseodym, Neodym, Promethium, Samarium, Europium, Gadolinium, Terbium, Dysprosium, Holmium, Erbium, Thulium, Ytterbium und Lutetium sowie
   - Hydraten der genannten Salze sowie
   - Mischungen der genannten Verbindungen,
(D) 0,01 bis 5,0 Gew.-% mindestens eines sich von der Lanthanoid-Verbindung unter (C) unterscheidenden Wärmestabilisators, ausgewählt aus aus der Gruppe bestehend aus
   a) Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, besonders bevorzugt CuCI, CuBr, Cul, CuCN und Cu₂O, CuCl₂, CuSO₄, CuO, Kupfer(II)acetat oder Kupfer(II)stearat,
   b) Stabilisatoren auf Basis sekundärer aromatischer Amine,
   c) Stabilisatoren auf Basis sterisch gehinderter Phenole,
   d) Phosphite und Phosphonite sowie
   e) Mischungen hiervon,
(E) 0 bis 20,0 Gew.-% mindestens eines Additivs,
   wobei sich die Komponenten (A) bis (E) auf 100 Gew.-% ergänzen. Die erfindungsgemäßen Formmassen zeichnen sich überraschenderweise durch eine sehr gute Wärmealterungsbeständigkeit über lange Zeiträume aus.

**Insbesondere beträgt die Reißfestigkeit nach 2000 Stunden mehr als 90% (bestimmt als Quotient der Reißfestigkeitswerte gemäß ISO 527 zum Zeitpunkt 0 (entspricht 100 %) und nach Ende der Lagerung bei 230°C). Nach 3000 Stunden beträgt die Reißfestigkeit bevorzugt mindestens 50%, besonders bevorzugt mindestens 85 %.**

Die Reißdehnung nach 2000 Stunden beträgt 73% (bezogen auf den Ausgangswert) bzw. nach 3000 Stunden bevorzugt mindestens 50% und besonders bevorzugt mindestens 65 % (bezogen auf den Ausgangswert).

Vorzugsweise beträgt der Anteil der Komponente (A) 37 bis 84.9 Gew.-%, besonders bevorzugt 48 bis 69.8 Gew.-%.

Bezogen auf 100 Gew.-% für die Summe der Anteile des caprolactamhaltigen Polyamids (A1) und des Polyamids (A2) beträgt der Anteil an caprolactamhaltigem Polyamid (A1) 10 bis 40 Gew.-%, bevorzugt 14 bis 30 Gew.-%, besonders bevorzugt 20 bis 30 Gew.-% und der Anteil an Polyamid (A2) 60 bis 90 Gew.-%, bevorzugt 70 bis 86 Gew.-%, besonders bevorzugt 70 bis 80 Gew.-%.

Unter einem caprolactamhaltigen Polyamid (A1) ist erfindungsgemäß ein Polyamid zu verstehen, das durch Polymerisation von Caprolactam bzw. Copolymerisation/-polykondensation von Caprolactam mit weiteren Monomeren herstellbar ist. Das caprolactamhaltige Polymer enthält somit mindestens 50 Gew.-% Wiederholungseinheiten, die von Caprolactam abgeleitet sind.

Es ist bevorzugt, dass es sich bei dem Polyamid (A2) um ein teilaromatisches Polyamid ausgewählt aus der Gruppe bestehend aus PA 4T/4I, PA 4T/6I, PA 5T/5I, PA 6T/6I, PA 6T/6I/6, PA 6T/6, PA 6T/6I/66, PA 6T/MPDMT (MPDMT = MPMDT = Polyamid auf Basis einer Mischung aus Hexamethylendiamin und 2-Methyl Pentamethylendiamin als Diaminkomponente und Terephthalsäure als Disäurekomponente), PA 6T/66, PA 6T/610, PA 10T/612, PA 10T/106, PA 6T/612, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12 sowie Mischungen davon oder um ein aliphatisches Polyamid ausgewählt aus der Gruppe bestehend aus PA 66, PA 46 oder Mischungen hiervon handelt. Sofern das Polyamid (A2) Caprolactam enthält, liegt der Anteil an Caprolactam bevorzugt unter 50 Gew.-%, besonders bevorzugt unter 40 Gew.-% und insbesondere bevorzugt im Bereich von 5 bis 30 Gew.-%. In einer weiteren bevorzugten Ausführungsform beträgt der Caprolactam-Gehalt in der Komponente (A2) 0 bis 30 Gew.-%.

Vorzugsweise beträgt der Anteil des mindestens einen anorganischen Radikalfängers (C) 0,1 bis 3,0 Gew.-%, besonders bevorzugt 0,2 bis 2,0 Gew.-%.

Bei dem anorganischen Radikalfänger (C) handelt es sich um eine Lanthanoid-Verbindung ausgewählt aus der Gruppe bestehend aus
- Fluoriden, Chloriden, Bromiden, Iodiden, Oxidhalogeniden, Sulfaten, Nitraten, Phosphaten, Chromaten, Perchloraten, Oxalaten, den Monochalkogeniden von Schwefel, Selen und Tellur, Carbonaten, Hydroxiden, Oxiden, Trifluoromethansulfonaten, Acetylacetonaten, Alkoholaten, 2-Ethylhexanoaten
   der Lanthanoide Lanthan, Cer, Praeseodym, Neodym, Promethium, Samarium, Europium, Gadolinium, Terbium, Dysprosium, Holmium, Erbium, Thulium, Ytterbium und Lutetium sowie
- Hydraten der genannten Salze sowie
- Mischungen der genannten Verbindungen.

Weiterhin ist es bevorzugt, dass das Kation des anorganischen Radikalfängers (C) eine Oxidationszahl von +III oder +IV aufweist.

In einer bevorzugten Ausführungsform der Erfindung werden als anorganischer Radikalfänger (C) Verbindungen des Cers, Lanthans oder Mischungen davon eingesetzt.

In einer besonders bevorzugten Ausführungsform der Erfindung werden als anorganischer Radikalfänger (C) Verbindungen des Lanthans eingesetzt. Bevorzugt werden die anorganischen Radikalfänger (C) mit einem Redoxpartner eingesetzt, bevorzugte Redoxpartner sind Alkali- und/oder Erdalkalimetallhalogenide.

Darüber hinaus ist die erfindungsgemäße Polyamid-Formmasse frei von Metallsalzen und/oder Metalloxiden eines Übergangsmetalls der Gruppe VB, VIB, VIIB oder VIIIB des Periodensystems.

Besonders bevorzugt wird als anorganischer Radikalfänger (C) Certetrahydroxid, Lanthantrihydroxid oder Mischungen davon verwendet.

Insbesondere bevorzugt wird als anorganischer Radikalfänger (C) Lanthantrihydroxid verwendet.

Das erfindungsgemäß enthaltene Polyamid (A2) hat bevorzugt einen Schmelzpunkt im Bereich von 250 bis 340°C, besonders bevorzugt im Bereich von 280 bis 330°C und/oder eine Glasübergangstemperatur im Bereich von 50 bis 140°C, bevorzugt im Bereich von 110 bis 140°C, besonders bevorzugt im Bereich von 115 bis 135°C.

Eine weitere bevorzugte Ausführungsform sieht vor, dass das mindestens eines weitere Polyamid (A2) teilaromatisch ist und eine Lösungsmittelviskosität ηᵣₑₗ von höchstens 2,6, bevorzugt von 1,45 bis 2,3, weiter bevorzugt von 1,5 bis 2,0, besonders bevorzugt von 1,5 bis 1,8 aufweist, gemessen an einer Lösung von 0,5 g Polyamid (A2) in 100 ml m-Kresol bei 20 °C.

Vorzugsweise ist das mindestens eine weitere Polyamid (A2) teilaromatisch und aus
a) Dicarbonsäuren, die bezogen auf die Gesamtmenge der Dicarbonsäuren mindestens 50 mol-% Terephthalsäure beinhalten,
b) Diaminen, die bezogen auf die Gesamtmenge der Diamine mindestens 80 mol-% aliphatische Diamine mit 4 bis 18 Kohlenstoffatomen, bevorzugt 6 bis 12 Kohlenstoffatomen beinhalten sowie
c) gegebenenfalls Lactamen und/oder Aminocarbonsäuren hergestellt.

Eine weitere bevorzugte Ausführungsform sieht vor, dass das mindestens eine weitere Polyamid (A2) teilaromatisch ist und aus
a) 50 bis 100 mol-% Terephthalsäure und/oder Naphthalindicarbonsäure sowie 0 bis 50 mol-% mindestens einer aliphatischen Dicarbonsäure mit 6 bis 12 Kohlenstoffatomen, und/oder 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4 bis 18 Kohlenstoffatomen, vorzugsweise mit 6 bis 12 Kohlenstoffatomen sowie 0 bis 20 mol-% mindestens eines cycloaliphatischen Diamins, wie z.B. PACM, MACM, IPDA, vorzugsweise mit 6 bis 20 Kohlenstoffatomen, und/oder 0 bis 20 mol-% mindestens eines araliphatischen Diamins, MXDA und PXDA, bezogen auf die Gesamtmenge der Diamine sowie
c) 0 bis 20 mol-% Aminocarbonsäuren und/oder Lactamen je mit 6 bis 12 Kohlenstoffatomen
hergestellt ist.

Der Gehalt an Caprolactam des Caprolactam-haltigen Polyamids (A1) beträgt bevorzugt 60 bis 100 Gew.-%, besonders bevorzugt 70 bis 95 Gew.-%.

Vorzugsweise weist das mindestens eine caprolactamhaltige Polyamid (A1) eine Lösungsmittelviskosität ηᵣₑₗ im Bereich von 1,6 bis 3,0, bevorzugt im Bereich von 1,7 bis 2,5, insbesondere im Bereich von 1,8 bis 2,2 auf, gemessen an einer Lösung von 1,0 g Polyamid (A1) in 100 ml 96 %-iger Schwefelsäure bei 20 °C.

Vorzugsweise beträgt der Anteil des mindestens einen Füll- und Verstärkungsmittels (B) 15 bis 60 Gew.-%, besonders bevorzugt 30 bis 50 Gew.-%.

Das erfindungsgemäße eingesetzte Füll- und Verstärkungsmittel (B) ist vorzugsweise ausgewählt aus der Gruppe bestehend aus
a) Glas- und/oder Kohlenstofffasern, bevorzugt mit einer Länge im Bereich von 0,2 bis 50 mm und/oder einem Durchmesser von 5 bis 40 µm und/oder Endlosfasern (Rovings),
b) teilchenförmigen Füllstoffen, vorzugsweise mineralischen Füllstoffen auf Basis von natürlichen und/oder synthetischen Schichtsilikaten, Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen und/oder Mischungen hieraus sowie
c) Mischungen hiervon.

Der mindestens eine Wärmestabilisator (D) ist ausgewählt aus der Gruppe bestehend aus
a) Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, besonders bevorzugt CuCI, CuBr, Cul, CuCN und Cu₂O, CuCl₂, CuSO₄, CuO, Kupfer(II)acetat oder Kupfer(II)stearat,
b) Stabilisatoren auf Basis sekundärer aromatischer Amine,
c) Stabilisatoren auf Basis sterisch gehinderter Phenole
d) Phosphite und Phosphonite sowie
e) Mischungen hiervon.

Der Anteil des mindestens einen Wärmestabilisators (D) beträgt 0,01 bis 5,0 Gew.-%, bevorzugt 0,03 bis 3,0 Gew.-% und besonders bevorzugt 0,05 bis 1,0 Gew.-%.

Wenn die Wärmestabilisatoren (D) Metalle oder Metallverbindungen sind, werden diese bevorzugt in einer tiefen Oxidationsstufe eingesetzt, bei Kupferstabilisatoren ist die Oxidationsstufe +I bevorzugt.

Eine bevorzugte Ausführungsform sieht es vor, dass neben dem anorganischen Radikalfänger, welcher bevorzugt eine Cer-haltige und/oder Lanthan-haltige Verbindung und besonders bevorzugt Certetrahydroxid und/oder Lanthantrihydroxid ist, eine Verbindung des ein- oder zweiwertigen Kupfers zur Wärmestabilisierung enthalten ist. Hierbei zeigen sich überraschend starke synergistische Wirkungen, die vermutlich darauf zurückzuführen sind, dass die Kombination die Reaktivität beider Metalle und damit deren Aktivität als Wärmestabilisator erhöht.

Eine weitere bevorzugte Ausführungsform sieht vor, dass der anorganische Radikalfänger, bevorzugt eine Cer-haltige und/oder Lanthan-haltige Verbindung, besonders bevorzugt Certetrahydroxid und/oder Lanthantrihydroxid, mit einem Stabilisator auf Basis sekundärer aromatischer Amine kombiniert wird. Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin, N,N'-Diphenyl-p-phenylendiamin oder Mischungen von zwei oder mehreren davon.

Eine weitere bevorzugte Ausführungsform sieht vor, dass der anorganische Radikalfänger, bevorzugt eine Cer-haltige und/oder Lanthan-haltige Verbindung und besonders bevorzugt Certetrahydroxid und/oder Lanthantrihydroxid, mit einem Stabilisator auf Basis sterisch gehinderter Phenole kombiniert wird. Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Eine weitere bevorzugte Ausführungsform sieht vor, dass der anorganische Radikalfänger, bevorzugt eine Cer-haltige und/oder Lanthan-haltige Verbindung, besonders bevorzugt Certetrahydroxid und/oder Lanthantrihydroxid, mit Phosphiten und/oder Phosphoniten als Wärmestabilisator kombiniert wird. Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Darüber hinaus sind natürlich auch Kombinationen von anorganischem Radikalfänger mit mehreren Verbindungen der Gruppe a) bis d) möglich.

Die erfindungsgemäßen Formmassen können weitere Zusatzstoffe (E), wie z. B. aus der Gruppe der Lichtschutzmittel, UV-Stabilisatoren, UV-Absorber oder UV-Blocker, Gleitmittel, Farbstoffe, Nukleierungsmittel, metallische Pigmente, Antistatika, Leitfähigkeitsadditive, Entformungsmittel, Flammschutzmittel, optischen Aufheller, Schlagzähmodifikatoren, oder Gemische der genannten Zusatzstoffe enthalten. Als Antistatika können in den erfindungsgemäßen Formmassen z.B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein. Die Zusatzstoffe (E) im Sinn der vorliegenden Erfindung sind verschieden von den anorganischen Radikalfängern (C). Anorganische Verbindungen, die als Radikalfänger wirken, sind explizit als Zusatzstoffe (E) ausgeschlossen.

Bevorzugt sind die Zusatzstoffe (E) in 0,01 bis 20 Gew.-%, besonders bevorzugt in 0,1 bis 15 Gew.-% und insbesondere bevorzugt in 0,5 bis 10 Gew.-%.

Vorzugsweise ist die Polyamid-Formmasse frei von hypophosphoriger Säure, Hypophosphaten sowie Cerdioxid. Außerdem werden der Formmasse vorzugsweise keine Metallsalze und/oder Metalloxide eines Übergangsmetalls der Gruppe VB, VIB, VIIB oder VIIIB des Periodensystems zugesetzt.

Ein weiterer Vorteil der erfindungsgemäßen Polyamid-Formmassen besteht darin, dass sich ihre Verwendung in Bauteilen mit einfachen analytischen Methoden, wie z.B. RFA (Röntgenfluoreszenzanalyse), ICP (ion-coupled plasma) oder EDX (energy dispersive X-ray) nachweisen lässt. Durch die anorganischen Radikalfänger (C), insbesondere durch die Lanthanoiden La, Ce, Pr, Nd, Pm, Sm, Eu, Gd, Tb, Dy, Ho, Er, Tm, Yb, Lu und Mischungen daraus, deren Nachweisegrenze bei <100 ppm liegt, kann ein Fingerabdruck der Formmasse erzeugt werden, der eine eindeutige Identifizierung ermöglicht.

Erfindungsgemäß werden ebenso Formkörper bereitgestellt, die aus einer Polyamid-Formmasse, wie sie zuvor beschrieben wurde, herstellbar sind. Diese Formkörper haben vorzugsweise die Form eines Bauteils für den Automobil- oder Elektro/Elektronikbereich, insbesondere Zylinderkopfhauben, Motorabdeckungen, Gehäuse für Ladeluftkühler, Ladeluftkühlerklappen, Ansaugrohre, Ansaugkrümmer, Konnektoren, Zahnräder, Lüfterräder, Kühlwasserkästen, Gehäuse oder Gehäuseteil für Wärmetauscher, Kühlmittelkühler, Ladeluftkühler, Thermostat, Wasserpumpe, Heizkörper, Befestigungsteile, in Form eines elektrischen oder elektronischen Bauteils, einer Leiterplatte, einem Teil einer Leiterplatte, eines Gehäusebestandteils, einer Folie, einer Leitung, insbesondere in Form eines Schalters, eines Verteilers, eines Relais, eines Widerstandes, eines Kondensators, einer Spule, einer Lampe, einer Diode, einer LED, eines Transistors, eines Konnektors, eines Reglers, eines Speichers und/oder eines Sensors.

Zur Herstellung der Polyamid-Formmasse werden die Komponenten auf üblichen Compoundiermaschinen, wie z.B. ein- oder zweiwelligen Extrudern oder Schneckenknetern gemischt. Die Komponenten werden dabei einzelnen über gravimetrische Dosierwaagen in den Einzug gefördert oder in Form eines Dryblends zugeführt. Die Füll- oder Verstärkungsmittel werden bevorzugt über Sidefeeder in die Polymerschmelze dosiert.

Werden Zusatzstoffe verwendet, können diese direkt oder in Form eines Masterbatches eingebracht werden. Bei dem Trägermaterial des Masterbatches handelt es sich bevorzugt um ein Polyolefin oder ein Polyamid.

Zur Dryblend-Herstellung werden die getrockneten Granulate und gegebenenfalls weitere Zusatzstoffe vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 230 °C bis 340 °C. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird für 12 bis 24 Stunden bei 80 bis 120 °C unter Stickstoff oder im Vakuum auf einen Wassergehalt von unter 0.1 Gew.-% getrocknet.

Die Verarbeitung der Polyamid-Formmassen im Spritzguss erfolgt bei Zylindertemperaturen von 250 °C bis 340 °C und Werkzeugtemperaturen von 80 °C bis 140 °C.

Anhand der nachfolgenden Beispiele soll der erfindungsgemäße Gegenstand näher erläutert werden, ohne diesen auf die hier gezeigten spezifischen Ausführungsformen einschränken zu wollen.

### Herstellung der Formmassen und Prüfkörper

Die Formmassen für das erfindungsgemäße Beispiel B1 sowie für das Vergleichsbeispiel VB1 wurde auf einem Zweiwellenextruder der Fa. Werner und Pfleiderer Typ ZSK25 hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert. Die Polyamid-Granulate wurden zusammen mit den Additiven als Dryblend in die Einzugszone dosiert, während die Glasfaser über Sidefeeder 3 Gehäuseeinheiten vor der Düse in die Polymerschmelze dosiert wurde. Die Gehäusetemperatur wurde als aufsteigendes Profil bis 280°C eingestellt. Bei 150 upm wurden 10 kg Durchsatz erreicht. Nach Abkühlen der Stränge im Wasserbad, Granulierung und Trocknung bei 120°C für 24 Stunden erfolgte das Verspritzen der Compounds zu ISO-Prüfkörpern. Es wurde auf einer Spritzgussmaschine Arburg Allrounder 320-210-750 bei Zylindertemperaturen von 275°C bis 290°C der Zonen 1 bis 4 und einer Werkzeugtemperatur von 100°C verspritzt.

Für die restlichen Beispiele und Vergleichsbeispiele wurde die Gehäusetemperatur als aufsteigendes Profil bis 330°C eingestellt. Für den Spritzguss wurden Zylindertemperaturen von 310°C bis 330°C der Zonen 1 bis 4 und eine Werkzeugtemperatur von 130°C verwendet.

In Tabelle 1 sind die für die Beispiele und Vergleichsbeispiele eingesetzten Chemikalien aufgeführt.

**Tabelle 1:**

| **Stoff** | **Handelsname** | **Lieferant** | **rel. Viskosität** | **H₂O-Gehalt [Gew.-%]** |
|---|---|---|---|---|
| PA 66 | Radipol A45 | Radici Chimica, (I) | 1.75^{b} | |
| PA 6T/66 (55:45) | Grivory XE 3774 | EMS-CHEMIE AG (CH) | 1.63^{b} | <0.1 |
| PA 6 | Grilon A28 | EMS-CHEMIE AG (CH) | 2.65^{a} | <0.1 |
| Certetrahydroxid | - | TREIBACHER INDUSTRIE AG (AT) | - | - |
| Lanthantrihydroxid | - | TREIBACHER INDUSTRIE AG (AT) | - | - |
| Kupferiodid | - | DSM Andeno (NL) | - | - |
| Ca-Stearat | Ligastar CA 800 | Greven (DE) | - | - |
| Kl/Ca-Stearat (Verhältnis 98:2) | - | AJAY Europe S.A.R.L. (FR)^{c} | - | - |
| Antioxidans | Flexamin G | Adivant (US) | - | - |
| Farbstoff | Euthylenschwarz 00-6005C4 | BASF (DE) | - | - |
| Glasfasern | Vetrotrex 995 EC10-4.5 | OCV (FR) | - | - |

| | | | | |
|---|---|---|---|---|
| a) Bestimmt nach ISO 307 (1,0 g Polyamid in 100 ml 96 %-iger Schwefelsäure), Berechnung der relativen Viskosität (RV) nach RV = t/t0 in Anlehnung an Abschnitt 11 der Norm; b) Bestimmt nach ISO 307 (0,5 g Polyamid in 100 ml m-Kresol), Berechnung der relativen Viskosität (RV) nach RV = t/t0 in Anlehnung an Abschnitt 11 der Norm; c) Lieferant von Kl, Abmischung mit Ca-Stearat erfolgt bei EMS. | | | | |

Tabelle 2 zeigt die Zusammensetzung der Beispiele B1 bis B3 und der Vergleichsbeispiele VB1 bis VB4.

**Tabelle 2:**

| **Zusammensetzung** | B1 | B2 | B3 | VB1 | VB2 | VB3 | VB4 |
|---|---|---|---|---|---|---|---|
| PA66 | 53.2 | - | - | 53.5 | - | - | - |
| PA6T/66 | - | 50.3 | 50.6 | - | 67.2 | 68.0 | 50.8 |
| PA6 | 13.405 | 16.9 | 16.9 | 13.405 | - | - | 16.9 |
| Certetrahydroxid | 0.3 | 0.5 | - | - | 0.5 | - | - |
| Lanthantrihydroxid | - | - | 0.2 | - | - | - | - |
| Kupferiodid | 0.035 | 0.035 | 0.035 | 0.035 | 0.035 | 0.035 | 0.035 |
| Kl/Ca-Stearat (Verhältnis 98:2) | 0.21 | 0.3 | 0.3 | 0.21 | 0.3 | - | 0.3 |
| Ca-Stearat | 0.5 | - | - | 0.5 | - | - | - |
| Antioxidans | 0.35 | - | - | 0.35 | - | - | - |
| Farbstoff | 2.0 | 2.0 | 2.0 | 2.0 | 2.0 | 2.0 | 2.0 |
| Glasfasern | 30 | 30 | 30 | 3.0 | 30 | 30 | 30 |

In den Tabellen 3 und 4 werden die mechanischen Eigenschaften nach einer Wärmelagerung bei 230°C und verschiedener Dauer der Wärmelagerung aufgeführt.

**Tabelle 3:**

| | B1 | B2 | B3 | VB1 | VB2 | VB3 | VB4 |
|---|---|---|---|---|---|---|---|
| **Mechanische Eigenschaften (nach 0 h)** | | | | | | | |
| Zugmodul [MPa] | 8509 | 9251 | 9750 | 10459 | 10033 | 9621 | 9380 |
| Reissfestigkeit [MPa] | 155 | 168 | 179 | 164 | 189 | 177 | 165 |
| Reissdehnung [%] | 3.0 | 2.5 | 2.6 | 2.2 | 2.8 | 2.7 | 2.7 |

| **Mechanische Eigenschaften (nach 250 h)** | | | | | | | |
|---|---|---|---|---|---|---|---|
| Zugmodul [MPa] | 8668 | n.b. | n.b. | 9934 | n.b. | n.b. | n.b. |
| Reissfestigkeit [MPa] | 136 | n.b. | n.b. | 155 | n.b. | n.b. | n.b. |
| Reissdehnung [%] | 2.3 | n.b. | n.b. | 2.5 | n.b. | n.b. | n.b. |

| **Mechanische Eigenschaften (nach 500 h)** | | | | | | | |
|---|---|---|---|---|---|---|---|
| Zugmodul [MPa] | 8567 | n.b. | n.b. | 9931 | n.b. | n.b. | n.b. |
| Reissfestigkeit [MPa] | 137 | n.b. | n.b. | 115 | n.b. | n.b. | n.b. |
| Reissdehnung [%] | 2.5 | n.b. | n.b. | 1.4 | n.b. | n.b. | n.b. |

| **Mechanische Eigenschaften (nach 1000 h)** | | | | | | | |
|---|---|---|---|---|---|---|---|
| Zugmodul [MPa] | 9055 | 10237 | 10328 | 8723 | 9877 | 9155 | 10291 |
| Reissfestigkeit [MPa] | 148 | 143 | 154 | 29.4 | 91 | 75 | 138 |
| Reissdehnung [%] | 2.2 | 1.7 | 1.8 | 0.4 | 1 | 0.9 | 1.7 |

| **Mechanische Eigenschaften (nach 1500 h)** | | | | | | | |
|---|---|---|---|---|---|---|---|
| Zugmodul [MPa] | 9036 | n.b. | n.b. | - | n.b. | - | n.b. |
| Reissfestigkeit [MPa] | 147 | n.b. | n.b. | - | n.b. | - | n.b. |
| Reissdehnung [%] | 2.3 | n.b. | n.b. | - | n.b. | - | n.b. |

**Tabelle 4:**

| **Mechanische Eigenschaften (nach 2000 h)** | B1 | B2 | B3 | VB1 | VB2 | VB3 | VB4 |
|---|---|---|---|---|---|---|---|
| Zugmodul [MPa] | 8962 | 10434 | 10187 | - | 7313 | - | 9992 |
| Reissfestigkeit [MPa] | 144 | 124 | 163 | - | 28 | - | 120 |
| Reissfestigkeit bezogen auf den Ausgangswert[%] | 93 | 74 | 91 | - | 15 | - | 73 |
| Reissdehnung [%] | 2.2 | 1.4 | 1.9 | - | 0.7 | - | 1.3 |
| Reissdehnung bezogen auf den Ausgangswert [%] | 73 | 56 | 73 | - | 25 | - | 48 |

| **Mechanische Eigenschaften (nach 3000 h)** | | | | | | | |
|---|---|---|---|---|---|---|---|
| Zugmodul [MPa] | 8988 | 10383 | 10629 | - | - | - | 10114 |
| Reissfestigkeit [MPa] | 141 | 123 | 159 | - | - | - | 110 |
| Reissfestigkeit bezogen auf den Ausgangswert[%] | 91 | 73 | 89 | - | - | - | 67 |
| Reissdehnung [%] | 2.1 | 1.3 | 1.8 | - | - | - | 1.2 |
| Reissdehnung bezogen auf den Ausgangswert [%] | 70 | 52 | 69 | - | - | - | 44 |

| | | | | | | | |
|---|---|---|---|---|---|---|---|
| n.b. nicht bestimmt - Sobald die Reissdehnung nach Wärmelagerung unter 1 % gesunken war, wurde die Wärmelagerung abgebrochen. | | | | | | | |

Die Messungen wurden nach folgenden Normen und an folgenden Prüfkörpern durchgeführt.

### Relative Viskosität Polyamid (A1):

Die relative Viskosität (ηᵣₑₗ) wurde bestimmt nach DIN EN ISO 307 an Lösungen von 1.0 g Polymer gelöst in 100 ml 96 %-iger Schwefelsäure bei einer Temperatur von 20°C. Berechnung der relativen Viskosität (RV) nach RV = t/t₀ in Anlehnung an Abschnitt 11 der Norm.

### Relative Viskosität Polyamid (A2):

Die relative Viskosität (ηᵣₑₗ) wurde bestimmt nach DIN EN ISO 307 an Lösungen von 0,5 g Polymer gelöst in 100 ml m-Kresol bei einer Temperatur von 20°C.

Berechnung der relativen Viskosität (RV) nach RV = t/t₀ in Anlehnung an Abschnitt 11 der Norm.

### Bestimmung des Zugmoduls

Die Bestimmung des Zugmoduls erfolgte gemäß der ISO 527 mit einer Zuggeschwindigkeit von 1 mm/min an einem ISO-Zugstab gemäß der Norm ISO 3167, Typ A mit den Dimensionen 170 x 20/10 x 4 mm bei einer Temperatur von 23 °C.

### Bestimmung der Bruchfestigkeit und Bruchdehnung

Die Bestimmung der Bruchfestigkeit und Bruchdehnung erfolgte gemäß der ISO 527 mit einer Zuggeschwindigkeit von 5 mm/min an einem ISO-Zugstab gemäß der Norm ISO 3167, Typ A mit den Dimensionen 170 x 20/10 x 4 mm bei einer Temperatur von 23 °C.

### Durchführung der Wärmelagerung

Die Wärmelagerungen wurden in belüfteten, elektrisch beheizten Einzelkammer-Wärmeschränken nach IEC 60216-4-1 bei 230°C an ISO-Zugstäben (Norm: ISO 3167, Typ A, 170 x 20/10 x 4 mm) durchgeführt. Nach den in Tabelle 3 und 4 angegebenen Zeiten wurden Probekörper dem Ofen entnommen und nach Abkühlen auf 23°C nach den oben angegebenen Methoden geprüft.

## Patentansprüche

1. Polyamid-Formmasse mit folgender Zusammensetzung:
(A) 25 bis 84,99 Gew.-% mindestens eines caprolactamhaltiges Polyamids (A1) mit einem Caprolactamgehalt von mindestens 50 Gew.-% und mindestens eines weiteren Polyamids (A2), wobei der Anteil des mindestens einen caprolactamhaltigen Polyamids (A1) an Komponente (A) 10 bis 40 Gew.-% beträgt und der Anteil des mindestens einen weiteren Polyamids (A2) an Komponente A 60 bis 90 Gew.-% beträgt, wobei sich die Komponenten (A1) und (A2) auf 100 Gew.-% ergänzen,
(B) 15 bis 70 Gew.-% mindestens eines Füll- und Verstärkungsmittels,
(C) 0,01 bis 5,0 Gew.-% mindestens einer Lanthanoid-Verbindung, ausgewählt aus der Gruppe bestehend aus
- Fluoriden, Chloriden, Bromiden, Iodiden, Oxidhalogeniden, Sulfaten, Nitraten, Phosphaten, Chromaten, Perchloraten, Oxalaten, den Monochalkogeniden von Schwefel, Selen und Tellur, Carbonaten, Hydroxiden, Oxiden, Trifluoromethansulfonaten, Acetylacetonaten, Alkoholaten, 2-Ethylhexanoaten
der Lanthanoide Lanthan, Cer, Praseodym, Neodym, Promethium, Samarium, Europium, Gadolinium, Terbium, Dysprosium, Holmium, Erbium, Thulium, Ytterbium und Lutetium sowie
- Hydraten der genannten Salze sowie
- Mischungen der genannten Verbindungen,
(D) 0,01 bis 5,0 Gew.-% mindestens eines sich von der Lanthanoid-Verbindung unter (C) unterscheidenden Wärmestabilisators, ausgewählt aus der Gruppe bestehend aus
a) Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, besonders bevorzugt CuCl, CuBr, Cul, CuCN und Cu₂O, CuCl₂, CuSO₄, CuO, Kupfer(II)acetat oder Kupfer(II)stearat,
b) Stabilisatoren auf Basis sekundärer aromatischer Amine,
c) Stabilisatoren auf Basis sterisch gehinderter Phenole
d) Phosphite und Phosphonite sowie
e) Mischungen hiervon,
(E) 0 bis 20,0 Gew.-% mindestens eines Additivs,
wobei sich die Komponenten (A) bis (E) auf 100 Gew.-% ergänzen.

2. Polyamid-Formmasse nach Anspruch 1,
**dadurch gekennzeichnet, dass** wobei sich bei dem Polyamid (A2) um ein teilaromatisches Polyamid ausgewählt aus der Gruppe bestehend aus PA 4T/4I, PA 4T/6I, PA 5T/5I, PA 6T/6I, PA 6T/6I/6, PA 6T/6, PA 6T/6I/66, PA 6T/MPDMT, PA 6T/66, PA 6T/610, PA 10T/612, PA 10T/106, PA 6T/612, PA 6T/10T, PA 6T/10I, PA 9T, PA 10T, PA 12T, PA 10T/10I, PA10T/12, PA10T/11, PA 6T/9T, PA 6T/12T, PA 6T/10T/6I, PA 6T/6I/6, PA 6T/6I/12 sowie Mischungen davon oder um ein aliphatisches Polyamid ausgewählt aus der Gruppe bestehend aus PA 66, PA 46 oder Mischungen hiervon handelt.

3. Polyamid-Formmasse nach einem der vorhergehenden Ansprüche, **dadurch gekennzeichnet, dass** das mindestens eine Polyamid (A2) einen Schmelzpunkt im Bereich von 250 bis 340°C, bevorzugt im Bereich von 280 bis 330°C und/oder eine Glasübergangstemperatur im Bereich von 50 bis 140°C, bevorzugt im Bereich von 110 bis 140°C, besonders bevorzugt im Bereich von 115 bis 135°C aufweist.

4. Polyamid-Formmasse nach einem der vorhergehenden Ansprüche, **dadurch gekennzeichnet, dass** das mindestens eine weitere Polyamid (A2) teilaromatisch ist und eine Lösungsmittelviskosität ηᵣₑₗ von höchstens 2,6, bevorzugt von 1,45 bis 2,3, weiter bevorzugt von 1,5 bis 2,0, insbesondere von 1,5 bis 1,8 aufweist, gemessen an einer Lösung von 0,5 g Polyamid (A2) in 100 ml m-Kresol bei 20 °C.

5. Polyamid-Formmasse nach einem der vorhergehenden Ansprüche, **dadurch gekennzeichnet, dass** das mindestens eine weitere Polyamid (A2) teilaromatisch ist und aus
a) Dicarbonsäuren, die bezogen auf die Gesamtmenge der Dicarbonsäuren mindestens 50 mol-% Terephthalsäure beinhalten,
b) Diaminen, die bezogen auf die Gesamtmenge der Diamine mindestens 80 mol-% aliphatische Diamine mit 4 bis 18 Kohlenstoffatomen, bevorzugt 6 bis 12 Kohlenstoffatomen beinhalten sowie
c) gegebenenfalls Lactamen und/oder Aminocarbonsäuren hergestellt ist.

6. Polyamid-Formmasse nach einem der vorhergehenden Ansprüche, **dadurch gekennzeichnet, dass** das mindestens eine weitere Polyamid (A2) teilaromatisch ist und aus
a) 50 bis 100 mol-% Terephthalsäure und/oder Naphthalindicarbonsäure sowie 0 bis 50 mol-% mindestens einer aliphatischen Dicarbonsäure mit 6 bis 12 Kohlenstoffatomen, und/oder 0 bis 50 mol-% mindestens einer cycloaliphatischen Dicarbonsäure mit 8 bis 20 Kohlenstoffatomen, und/oder 0 bis 50 mol-% Isophthalsäure, bezogen auf die Gesamtmenge der Dicarbonsäuren
b) 80 bis 100 mol-% mindestens eines aliphatischen Diamins mit 4 bis 18 Kohlenstoffatomen, vorzugsweise mit 6 bis 12 Kohlenstoffatomen sowie 0 bis 20 mol-% mindestens eines cycloaliphatischen Diamins, insbesondere PACM, MACM und IPDA, vorzugsweise mit 6 bis 20 Kohlenstoffatomen, und/oder 0 bis 20 mol-% mindestens eines araliphatischen Diamins, insbesondere MXDA und PXDA, bezogen auf die Gesamtmenge der Diamine sowie
c) 0 bis 20 mol-% Aminocarbonsäuren und/oder Lactamen je mit 6 bis 12 Kohlenstoffatomen
hergestellt ist.

7. Polyamid-Formmasse nach einem der Ansprüche 2 bis 6, **dadurch gekennzeichnet, dass** das mindestens eine caprolactamhaltige Polyamid (A1) einen Gehalt an Caprolactam von 60 Gew.-% bis 100 Gew.-%, bevorzugt 70 Gew.-% bis 95 Gew.-% aufweist.

8. Polyamid-Formmasse nach einem der vorhergehenden Ansprüche, **dadurch gekennzeichnet dass** das mindestens eine caprolactamhaltige Polyamid (A1) eine Lösungsmittelviskosität ηᵣₑₗ im Bereich von 1,6 bis 3,0, bevorzugt im Bereich von 1,7 bis 2,5, insbesondere im Bereich von 1,8 bis 2,2 aufweist, gemessen an einer Lösung von 1,0 g Polyamid (A1) in 100 ml 96 %-iger Schwefelsäure bei 20 °C.

9. Polyamid-Formmasse nach einem der vorhergehenden Ansprüche, **dadurch gekennzeichnet dass** das mindestens eine Füll- und Verstärkungsmittel (B) ausgewählt ist aus der Gruppe bestehend aus
a) Glas- und/oder Kohlenstofffasern, bevorzugt mit einer Länge im Bereich von 0,2 bis 50 mm und/oder einem Durchmesser von 5 bis 40 µm und/oder Endlosfasern (Rovings),
b) teilchenförmigen Füllstoffen, vorzugsweise mineralischen Füllstoffen auf Basis von natürlichen und/oder synthetischen Schichtsilikaten, Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen und/oder Mischungen hieraus sowie
c) Mischungen hiervon.

10. Polyamid-Formmasse, nach einem der vorhergehenden Ansprüche, **dadurch gekennzeichnet dass** der Anteil des mindestens einen Wärmestabilisators (D) 0,03 bis 3,0 Gew.-% und bevorzugt 0,05 bis 1,0 Gew.-% beträgt.

11. Polyamid-Formmasse nach einem der vorhergehenden Ansprüche, **dadurch gekennzeichnet, dass** die Polyamid-Formmasse frei von hypophosphoriger Säure, Hypophosphaten sowie Cerdioxid ist.

12. Polyamid-Formmasse nach einem der vorhergehenden Ansprüche, **dadurch gekennzeichnet, dass** die Polyamid-Formmasse frei von Metallsalzen und/oder Metalloxiden eines Übergangsmetalls der Gruppe VB, VIB, VIIB oder VIIIB des Periodensystems ist.

13. Formkörper herstellbar aus einer Polyamid-Formmasse nach einem der vorhergehenden Ansprüche, insbesondere in Form eines Bauteils für den Automobil- oder Elektro/Elektronikbereich, insbesondere Zylinderkopfhauben, Motorabdeckungen, Gehäuse für Ladeluftkühler, Ladeluftkühlerklappen, Ansaugrohre, Ansaugkrümmer, Konnektoren, Zahnräder, Lüfterräder, Kühlwasserkästen, Gehäuse oder Gehäuseteil für Wärmetauscher, Kühlmittelkühler, Ladeluftkühler, Thermostat, Wasserpumpe, Heizkörper, Befestigungsteile, in Form eines elektrischen oder elektronischen Bauteils, einer Leiterplatte, einem Teil einer Leiterplatte, eines Gehäusebestandteils, einer Folie, einer Leitung, insbesondere in Form eines Schalters, eines Verteilers, eines Relais, eines Widerstandes, eines Kondensators, einer Spule, einer Lampe, einer Diode, einer LED, eines Transistors, eines Konnektors, eines Reglers, eines Speichers und/oder eines Sensors.

## Claims

1. Polyamide moulding compound having the following composition:
(A) 25 to 84.99% by weight of at least one caprolactam-containing polyamide (A1) with a caprolactam content of at least 50% by weight and at least one further polyamide (A2), wherein component (A) is formed from 10 to 40% by weight of at least one caprolactam-containing polyamide (A1) and 60 to 90% by weight of at least one polyamide (A2), components (A1) and (A2) adding up to 100% by weight
(B) 15 to 70% by weight of at least one filler and reinforcing means,
(C) 0,01 to 5.0% by weight of at least one lanthanoid compound selected from the group consisting of
- fluorides, chlorides, bromides, iodides, oxyhalides, sulphates, nitrates, phosphates, chromates, perchlorates, oxalates, the monochalcogenides of sulphur, selenium and tellurium, carbonates, hydroxides, oxides, trifluoromethanesulphonates, acetylacetonates, alcoholates, 2-ethylhexanoates
- the lanthanoids, lanthanum, cerium, praesodymium, neodymium, promethium, samarium, europium, gadolinium, terbium, dysprosium, holmium, erbium, thulium, ytterbium and lutetium and also
- hydrates of the mentioned salt and also
- mixtures of the mentioned compounds.
(D) 0,01 to 5.0% by weight of at least one heat stabiliser which differs from the lanthanoid compound under (C) which is selected from the group consisting of
a) compounds of mono- or bivalent copper, e.g. salts of mono-or bivalent copper with inorganic or organic acids or mono-or bivalent phenols, the oxides of mono- or bivalent copper, or complex compounds of copper salts with ammonia, amines, amides, lactams, cyanides or phosphines, preferably Cu(I)- or Cu(II) salts of hydrohalogen acids, of hydrocyanic acids or the copper salts of aliphatic carboxylic acids, particularly preferably CuCl, CuBr, CuI, CuCN and Cu₂O, CuCl₂, CuSO₄, CuO, copper(II)acetate or copper(II)stearate,
b) stabilisers based on secondary aromatic amines,
c) stabilisers based on sterically hindered phenols
d) phosphites and phosphonites and also
e) mixtures hereof.
(E) 0 to 20.0% by weight of at least one additive,
components (A) to (E) adding up to 100% by weight.

2. Polyamide moulding compound according to claim 1, **characterised in that** polyamide (A2) concerns a partially aromatic polyamide selected from the group consisting of PA 4T/4I, PA 4T/6I, PA 5T/5I, PA 6T/6I, PA 6T/6I/6, PA 6T/6, PA 6T/6I/66, PA 6T/MPDMT, PA 6T/66, PA 6T/610, PA 10T/612, PA 10T/106, PA 6T/612, PA 6T/10T, PA 6T/10I, PA 9T, PA 10T, PA 12T, PA 10T/10I, PA 10T/12, PA 10T/11, PA 6T/9T, PA 6T/12T, PA 6T/10T/6I, PA 6T/6I/6, PA 6T/6I/12 or mixtures thereof or an aliphatic polyamide selected from the group consisting of PA 66, PA 46 or mixtures hereof.

3. Polyamide moulding compound according to one of the preceding claims, **characterised in that** the at least one polyamide (A2) has a melting point in the range of 250 to 340°C, preferably in the range of 280 to 330°C and/or a glass transition temperature in the range of 50 to 140°C, preferably in the range of 110 to 140°C, particularly preferably in the range of 115 to 135°C.

4. Polyamide moulding compound according to one of the preceding claims, **characterised in that** the at least one further polyamide (A2) is partially aromatic and has a solvent viscosity ηᵣₑₗ of at most 2.6, preferably of 1.45 to 2.3, further preferably of 1.5 to 2.0, in particular of 1.5 to 1.8, measured on a solution of 0.5 g polyamide (A2) in 100 ml m-cresol at 20°C.

5. Polyamide moulding compound according to one of the preceding claims, **characterised in that** the at least one further polyamide (A2) is partially aromatic and produced from
a) dicarboxylic acids which, relative to the total quantity of dicarboxylic acids, comprise at least 50% by mol of terephthalic acid,
b) diamines which, relative to the total quantity of diamines, comprise at least 80% by mol of aliphatic diamines with 4 to 18 carbon atoms, preferably 6 to 12 carbon atoms, and also
c) possibly lactams and/or aminocarboxylic acids.

6. Polyamide moulding compound according to one of the preceding claims, **characterised in that** the at least one further polyamide (A2) is partially aromatic and produced from
a) 50 to 100% by mol of terephthalic acid and/or naphthalene dicarboxylic acid and also 0 to 50% by mol of at least one aliphatic dicarboxylic acid with 6 to 12 carbon atoms, and/or 0 to 50% by mol of at least one cycloaliphatic dicarboxylic acid with 8 to 20 carbon atoms, and/or 0 to 50% by mol of isophthalic acid, relative to the total quantity of dicarboxylic acids
b) 80 to 100% by mol of at least one aliphatic diamine with 4 to 18 carbon atoms, preferably with 6 to 12 carbon atoms and also 0 to 20% by mol of at least one cycloaliphatic diamine, in particular PACM, MACM, IPDA, preferably with 6 to 20 carbon atoms and/or 0 to 20% by mol of at least one araliphatic diamine, in particular MXDA and PXDA, relative to the total quantity of diamines and also
c) 0 to 20% by mol of aminocarboxylic acids and/or lactams respectively with 6 to 12 carbon atoms.

7. Polyamide moulding compound according to one of the claims 2 to 6, **characterised in that** the at least one caprolactam-containing polyamide (A1) has a content of caprolactam of 60% by weight to 100% by weight, preferably 70% by weight to 95% by weight.

8. Polyamide moulding compound according to one of the preceding claims, **characterised in that** the at least one caprolactam-containing polyamide (A1) has a solvent viscosity ηᵣₑₗ in the range of 1.6 to 3.0, preferably in the range of 1.7 to 2.5, in particular in the range of 1.8 to 2.2, measured on a solution of 1.0 g polyamide (A1) in 100 ml 96% sulphuric acid at 20°C.

9. Polyamide moulding compound according to one of the preceding claims, **characterised in that** the at least one filler and reinforcing means (B) is selected from the group consisting of
a) glass- and/or carbon fibres, preferably with a length in the range of 0.2 to 50 mm and/or a diameter of 5 to 40 µm and/or endless fibres (rovings),
b) particulate fillers, preferably mineral fillers based on natural and/or synthetic layer silicates, talc, mica, silicate, quartz, titanium dioxide, wollastonite, kaolin, amorphous silicic acids, magnesium carbonate, magnesium hydroxide, chalk, lime, feldspar, barium sulphate, solid- or hollow glass balls or ground glass, permanently magnetic or magnetisable metal compounds and/or alloys and/or mixtures hereof and also
c) mixtures hereof.

10. Polyamide moulding compound according to one of the preceding claims, **characterised in that** the proportion of the least one heat stabiliser (D) is 0.03 to 3.0% by weight and preferably 0.05 to 1.0% by weight.

11. Polyamide moulding compound according to one of the preceding claims, **characterised in that** the polyamide moulding compound is free of hypophosphorous acid, hypophosphates and also cerium dioxide.

12. Polyamide moulding compound according to one of the preceding claims, **characterised in that** the polyamide moulding compound is free of metal salts and/or metal oxides of a transition metal of the group VB, VIB, VIIB or VIIIB of the periodic table.

13. Polyamide moulding compound producible from a polyamide moulding compound according to one of the preceding claims, in particular in the form of a component for the automobile- or electrical/electronic field, in particular cylinder head covers, engine covers, housings for charge coolers, charge cooler valves, suction pipes, suction manifolds, connectors, toothed wheels, ventilator wheels, cooling water tanks, housing or housing part for heat exchangers, coolant coolers, charge coolers, thermostat, water pump, heating unit, attachment parts, in the form of an electrical or electronic component, a circuit board, a part of a circuit board, a housing component, a foil, a line, in particular in the form of a switch, a distributor, a relay, a resistor, a capacitor, a coil, a lamp, a diode, an LED, a transistor, a connector, a controller, a memory and/or a sensor.

## Revendications

1. Mélange à mouler de polyamides ayant la composition suivante :
(A) 25 à 84,99 % en poids d'au moins un polyamide (A1) comprenant un caprolactame, ayant une teneur en caprolactame d'au moins 50 % en poids, et d'au moins un polyamide supplémentaire (A2), la proportion du ou des polyamides (A1) contenant un caprolactame étant de 10 à 40 % en poids par rapport au composant (A), et la proportion du ou des polyamides supplémentaires (A2) étant de 60 à 90 % en poids par rapport au composant A, la somme des proportions des composants (A1) et (A2) étant de 100 % en poids,
(B) 15 à 70 % en poids d'au moins une charge renforçante, et
(C) 0,01 à 5,0 % en poids d'au moins un composé de lanthanoïde, choisi dans le groupe consistant en
- les fluorures, les chlorures, les bromures, les iodures, les oxyhalogénures, les sulfates, les nitrates, les phosphates, les chromates, les perchlorates, les oxalates, les monochalcogénures de soufre, de sélénium et de tellure, les carbonates, les hydroxydes, les oxydes, les trifluorométhanesulfonates, les acétylacétonates, les alcoolates, les 2-éthylhexanoates des lanthanoïdes lanthane, cérium, praséodyme, néodyme, prométhium, samarium, europium, gadolinium, terbium, dysprosium, holmium, erbium, thulium, ytterbium et lutétium, ainsi que
- les hydrates des sels mentionnés, ainsi que
- les mélanges des composés mentionnés,
(D) 0,01 à 5,0 % en poids d'au moins un thermostabilisant, différent du composé de lanthanoïde de (C), choisi dans le groupe consistant en
a) les composés du cuivre mono- ou divalent, par exemple les sels du cuivre mono- ou divalent, et d'acides inorganiques ou organiques ou de mono- ou de diphénols, les oxydes du cuivre mono- ou divalent, ou les composés complexes de sels de cuivre et d'ammoniac, d'amines, d'amides, de lactames, de cyanures ou de phosphines, de préférence les sels de Cu(I) ou de Cu(II) des acides halogénhydriques, des acides cyanhydriques, ou les sels de cuivre des acides carboxyliques aliphatiques, d'une manière particulièrement préférée CuCl, CuBr, Cul, CuCN et Cu₂O, CuCl₂, CuSO₄, CuO, l'acétate de cuivre (II) ou le stéarate de cuivre(II),
b) les stabilisants à base d'amines aromatiques secondaires,
c) les stabilisants à base de phénols à empêchement stérique,
d) les phosphites et les phosphonites, ainsi que
e) les mélanges de ceux-ci,
(E) 0 à 20,0 % en poids d'au moins un additif,
la somme des proportions des composants (A) à (E) étant de 100 % en poids.

2. Mélange à mouler de polyamides selon la revendication 1, **caractérisé en ce que**, pour ce qui concerne le polyamide (A2), il s'agit d'un polyamide partiellement aromatique choisi dans le groupe consistant en PA 4T/4I, PA 4T/6I, PA 5T/5I, PA 6T/6I, PA 6T/6I/6, PA 6T/6, PA 6T/6I/66, PA 6T/MPDMT, PA 6T/66, PA 6T/610, PA 10T/612, PA 10T/106, PA 6T/612, PA 6T/10T, PA 6T/10I, PA 9T, PA 10T, PA 12T, PA 10T/10I, PA 10T/12, PA 10T/11, PA 6T/9T, PA 6T/12T, PA 6T/10T/6I, PA 6T/6I/6, PA 6T/6I/12, ainsi que les mélanges de ceux-ci, ou d'un polyamide aliphatique choisi dans le groupe consistant en PA 66, PA 46 ou les mélanges de ceux-ci.

3. Mélange à mouler de polyamides selon l'une des revendications précédentes, **caractérisé en ce que** le ou les polyamides (A2) présentent un point de fusion compris dans la plage de 250 à 340 °C, de préférence dans la plage de 280 à 330 °C, et/ou une température de transition vitreuse comprise dans la plage de 50 à 140 °C, de préférence dans la plage de 110 à 140 °C, d'une manière particulièrement préférée dans la plage de 115 à 135 °C.

4. Mélange à mouler de polyamides selon l'une des revendications précédentes, **caractérisé en ce que** le ou les polyamides supplémentaires (A2) sont partiellement aromatiques et présentent une viscosité dans un solvant ηᵣₑₗ d'au plus 2,6, de préférence de 1,45 à 2,3, mieux encore de 1,5 à 2,0, en particulier de 1,5 à 1,8, mesurée dans une solution de 0,5 g du polyamide (A2) dans 100 ml de m-crésol à 20 °C.

5. Mélange à mouler de polyamides selon l'une des revendications précédentes, **caractérisé en ce que** le ou les polyamides supplémentaires (A2) sont partiellement aromatiques et sont fabriqués à partir
a) d'acides dicarboxyliques qui, par rapport à la quantité totale des acides dicarboxyliques, contiennent au moins 50 % en moles d'acide téréphtalique,
b) de diamines, qui par rapport à la quantité totale des diamines contiennent au moins 80 % en moles de diamines aliphatiques ayant 4 à 18 atomes de carbone, de préférence 6 à 12 atomes de carbone, ainsi que
c) éventuellement de lactames et/ou d'acides aminocarboxyliques.

6. Mélange à mouler de polyamides selon l'une des revendications précédentes, **caractérisé en ce que** le ou les polyamides supplémentaires (A2) sont partiellement aromatiques et sont fabriqués à partir
a) de 50 à 100 % en moles d'acide téréphtalique et/ou d'acide naphtalènedicarboxylique, ainsi que de 0 à 50 % en moles d'au moins un acide dicarboxylique aliphatique ayant 6 à 12 atomes de carbone, et/ou de 0 à 50 % en moles d'au moins un acide dicarboxylique cycloaliphatique ayant 8 à 20 atomes de carbone, et/ou de 0 à 50 % en moles d'acide isophtalique, par rapport à la quantité totale des acides dicarboxyliques,
b) de 80 à 100 % en moles d'au moins une diamine aliphatique ayant 4 à 18 atomes de carbone, de préférence de 6 à 12 atomes de carbone, ainsi que de 0 à 20 % en moles d'au moins une diamine cycloaliphatique, en particulier PACM, MACM et IPDA, ayant de préférence 6 à 20 atomes de carbone, et/ou de 0 à 20 % en moles d'au moins une diamine araliphatique, en particulier MXDA et PXDA, par rapport à la quantité totale des diamines, ainsi que
c) de 0 à 20 % en moles d'acides aminocarboxyliques et/ou de lactames ayant chacun 6 à 12 atomes de carbone.

7. Mélange à mouler de polyamides selon l'une des revendications 2 à 6, **caractérisé en ce que** le ou les polyamides (A1) contenant du caprolactame présentent une teneur en caprolactame de 60 % en poids à 100 % en poids, de préférence de 70 % en poids à 95 % en poids.

8. Mélange à mouler de polyamides selon l'une des revendications précédentes, **caractérisé en ce que** le polyamide (A1) contenant du caprolactame présente une viscosité dans un solvant ηᵣₑₗ comprise dans la plage de 1,6 à 3,0, de préférence dans la plage de 1,7 à 2,5, en particulier dans la plage de 1,8 à 2,2, mesurée sur une solution de 1,0 g du polyamide (A1) dans 100 ml d'acide sulfurique à 96 % à 20 °C.

9. Mélange à mouler de polyamides selon l'une des revendications précédentes, **caractérisé en ce que** la ou les charges renforçantes (B) sont choisies dans le groupe consistant en
a) les fibres de verre et/ou de carbone, ayant de préférence une longueur comprise dans la plage de 0,2 à 50 mm et/ou un diamètre de 5 à 40 µm, et/ou les fibres continues (stratifils),
b) les charges particulaires, de préférence les charges minérales à base de phyllosilicates naturels et/ou synthétiques, le talc, le mica, les silicates, le quartz, le dioxyde de titane, la wollastonite, le kaolin, les silices amorphes, le carbonate de magnésium, l'hydroxyde de magnésium, la craie, la chaux, le feldspath, le sulfate de baryum, les billes de verre pleines ou creuses ou le verre broyé, les composés métalliques et/ou alliages aimantables ou à aimantation permanente, et/ou les mélanges de ceux-ci, ainsi que
c) les mélanges de ceux-ci.

10. Mélange à mouler de polyamides selon l'une des revendications précédentes, **caractérisé en ce que** la proportion du ou des thermostabilisants (D) est de 0,03 à 3,0 % en poids et de préférence de 0,05 à 1,0 % en poids.

11. Mélange à mouler de polyamides selon l'une des revendications précédentes, **caractérisé en ce que** le mélange à mouler de polyamides est exempt d'acide hypophosphoreux, d'hypophosphates ainsi que de dioxyde de cérium.

12. Mélange à mouler de polyamides selon l'une des revendications précédentes, **caractérisé en ce que** le mélange à mouler de polyamides est exempt de sels métalliques et/ou d'oxydes métalliques d'un métal de transition du Groupe VB, VIB, VIIB ou VIIIB du Tableau Périodique.

13. Objet moulé pouvant être fabriqué à partir d'un mélange à mouler de polyamides selon l'une des revendications précédentes, en particulier sous forme d'un composant pour le domaine automobile et/ou électrique/électronique, en particulier les couvercles de culasse, les capots-moteurs, les carters de refroidisseurs d'air de suralimentation, les volets de refroidisseurs d'air de suralimentation, les tubulures d'admission, les collecteurs d'admission, les connecteurs, les roues dentées, les roues de ventilateur, les réservoirs d'eau de refroidissement, les carters ou parties de carters d'échangeurs de chaleur, les refroidisseurs de liquide de refroidissement, les refroidisseurs d'air de suralimentation, un thermostat, une pompe à eau, les radiateurs, les pièces de fixation, sous forme d'un composant électrique ou électronique, d'une carte imprimée, d'une pièce de carte imprimée, d'un constituant de carter, d'une feuille, d'une ligne, en particulier sous forme d'un commutateur, d'un répartiteur, d'un relais, d'une résistance, d'un condensateur, d'une bobine, d'une lampe, d'une diode, d'une LED, d'un transistor, d'un connecteur, d'un régulateur, d'une mémoire et/ou d'un capteur.
